(19) Europäisches Patentamt
European Patent Office
Office européen des brevets

(11) **EP 0 994 630 A2**

(12) **EUROPÄISCHE PATENTANMELDUNG**

(43) Veröffentlichungstag:
**19.04.2000  Patentblatt 2000/16**

(51) Int. Cl.[7]: **H04N 13/02**

(21) Anmeldenummer: **99119995.1**

(22) Anmeldetag: **13.10.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **20.11.1998 DE 19853608**
**15.10.1998 US 104438 P**

(71) Anmelder:
• **Hentschke, Siegbert, Prof. Dr.-Ing.**
**D-34132 Kassel (DE)**

• **Graf, Jeanine, Dipl.-Ing.**
**Palo Alto, CA 94301 (US)**

(72) Erfinder:
• **Hentschke, Siegbert, Prof. Dr.-Ing.**
**D-34132 Kassel (DE)**
• **Graf, Jeanine, Dipl.-Ing.**
**Palo Alto, CA 94301 (US)**

(74) Vertreter:
**Freiherr von Schorlemer, Reinfried, Dipl.-Phys.**
**Karthäuser Strasse 5A**
**34117 Kassel (DE)**

(54) **Verfahren zur Herstellung von 3D - Fotos**

(57)    Die Computergraphik erlaubt es heute, Objekte, Häuser, Landschaften usw. aus allen Positionen perspektivisch getreu arzustellen. Eine echte dreidimensionale Darstellung auf Bildern ist bislang nur aus holografischen Methoden bekannt, die aufwendig sind, Probleme haben, die Farben richtig darzustellen, und darüberhinaus spezielles Licht benötigen. Das erfindungsgemäße Verfahren erlaubt eine dreidimensionale, farbgetreue Aufzeichnung und Darstellung von natürlichen Objekten (O1, O2) wie Personen auf einem Bild. Vor einem ausgewählten, dreidimensional dargestellten Hintergrund (34) kann beispielsweise ein Portrait wunschgemäß vor oder hinter der Bildebene dreidimensional in z.B. bis zu 128 Ansichten bzw. Tiefenpositionen wie eine Skulptur dargestellt werden. Das 3D-Farbfoto wird auf einem einfachen Schwarzweißfilm hochaufgelöst und codiert gespeichert. Durch ein µm-genaues Auflegen des Filmes auf eine vorhandene Zylinderlinsen-Rasterscheibe mit Farbmaske kommt die dreidimensionale Darstellung zur Geltung.

Fig.5

EP 0 994 630 A2

**Beschreibung**

Die Erfindung betrifft ein Verfahren nach dem Oberbegriff des Anspruchs 1 zur Herstellung von 3D-Fotos.

Stereoskope Film- und Projektionsverfahren sind seit Jahren im Einsatz. Meist wird polarisiertes Licht (horizontal/vertikal, zirkular) benutzt, um das rechte und linke Bild zu trennen. Mit dem Fortschritt der LCD-Technik wurde es möglich, die Lichtdurchlässigkeit von Kristallen elektronisch zu steuern. Dies machte die Entwicklung der Shutter-Technik möglich, bei der synchron mit der Halbbildfrequenz abwechselnd das rechte und das linke Brillenglas lichtundurchlässig wird und synchron dazu rechte und linke Bilder sequentiell auf dem Bildschirm erscheinen.

Autostereoskope Projektionen werden mit Hilfe von Leinwänden mit Streifenlinsenrastern bei mehreren Projektionsrichtungen durchgeführt. Dabei wird der entsprechenden Richtung das richtige Perspektivbild zugeordnet [R. Börner: Autostereoscopic 3-D Imaging by Front and Rear Projection and on Flat Panel Displays, Displays Vol. 14, No. 1 (1993), pp. 39-46]. Ein fließender Übergang von einer Perspektive zur nächsten ist dabei kaum zu erreichen, da die Anzahl der Projektionsrichtungen nicht beliebig erhöht werden kann. Bei einem autostereoskopen Display, das für nur eine Person bestimmt ist, verwendet man nur zwei Perspektiven, die eine bestimmte Blickrichtung erfordern [EP 0 836 332 A1; R. Börner: Autostereoskope Rückprojektions- und Flachbildschirme, Fernseh- und Kinotechnik Bd. 48, Nr. 11 (1994). S. 594-600]. Die Darstellung eines stereoskopen Bildes wie in einem Hologramm wird dagegen unter Verwendung von "Head Tracking"-Sensoren erreicht, die einerseits einen leistungsstarken Echtzeitrechner zur Berechnung der passenden stereoskopen Bildperspektiven und andererseits einen autostereoskopen Schirm zur Nachführung des optischen Strahlenganges steuern [EP 0 836 332 A2; S. Hentschke: Personenadaptiver autostereoskoper Monitor - eine Option für den Fernseher? Fernseh- und Kinotechnische Zeitschrift Nr. 5/1996, S. 242-248; DE 39 21 061 A1]. Hierbei wird die genaue Kopfposition und -bewegung detektiert, und die zugehörigen Bilder werden gleichzeitig generiert. Darüberhinaus kommen auch aufwendige VR-Systeme (Virtual Reality) unter Benutzung gewöhnungsbedürftiger "Head Mounted Displays" zum Einsatz.

In der Medizintechnik sind Kernspinresonanz und Computertomographie die wichtigsten Einsatzgebiete für stereoskope 3D-Visualisierungen. Um bestimmte gesuchte Perspektiven zu berechnen, werden leistungsfähige Spezialrechner eingesetzt. Kombinierte Computervisualisierungen und Echtzeitübertragungen von Endoskopen werden zu einem der wichtigsten neurochirurgischen Werkzeuge. Stereoskope Endoskope sind bereits im Einsatz. Eine elektronische Bewegungssteuerung über einen auf Infrarotbasis arbeitenden "Head Tracking Sensor" wird leicht zu kombinieren sein mit einem personenbezogenen autostereoskopen Bildschirmsystem.

Neben den Shutter-Monitoren sind autostereoskope adaptive Monitore bekannt (DE 195 00 315 C1), die für die jeweilige Betrachterposition zwei Perspektiven, eine rechte und eine linke, auf dem Monitor-Display getrennt für das rechte und linke Auge darzustellen vermögen. Dies erfordert jedoch eine in Echtzeit zu tätigende Neuberechnung von Gegenstandsperspektiven, wenn sich der Benutzer bewegt. Ebenfalls bekannt ist die gleichzeitige Darstellung einer Vielzahl von Perspektiven (z.B. bis zu 128) mit einem Hologramm-Display (PCT WO 98/216 19). Diese natürliche dreidimensionale Darstellung von Objekten benötigt kein Head-Tracking System mehr und kann von mehreren Personen gleichzeitig zur autostereoskopen Darstellung genutzt werden.

Der Erfindung liegt die Aufgabe zugrunde, ein Verfahren zur Herstellung von 3D-Fotos vorzuschlagen, mit dem mit einfachen technischen und kostengünstigen Mitteln ein Objekt, insbesondere ein Portrait einer Person, mit einer Vielzahl von Perspektiven farb- und tiefengetreu dargestellt werden kann. Die dreidimensionale Information des Bildes soll wie in PCT WO 98/26619 dargestellt und wahlweise auf einer schwarz-weißen, hochpräzisen Fotofilmschicht, auf einem herkömmlichen Filmmaterial oder auf einer normalen Folie gespeichert werden können.

Zur Lösung dieser Aufgabe dienen die kennzeichnenden Merkmale des Anspruchs 1.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:

Fig. 1 schematisch eine 3D-Portraitierung mit elektronischen Kameras, einem Graphikcomputer und einem Belichtungsgerät und die nachfolgende Wiedergabe;

Fig. 2 ein Stereofarbhologramm-Sichtgerät für 3D-Fotos, z.B. für die Kernspin- und Röntgentomographie;

Fig. 3 eine Zylinderlinsen-Rasterscheibe in auseinandergezogener Darstellung zusammen mit einem positionsgetreu auflegbaren 3D-Foto;

Fig. 4 die Darstellung von Objektpositionen in Kamera-Bildern;

Fig. 5 die Darstellung von Objektpositionen in Bildern von kreisförmig angeordneten Kameras;

Fig. 6 die Darstellung eines relativen Koordinatensystems für die Kamera und für den Betrachter;

Fig. 7 die Darstellung der Interpolation fehlender Perspektiven; und

Fig. 8 die Darstellung der verschiedenen Perspektiven in einem Hologrammbild.

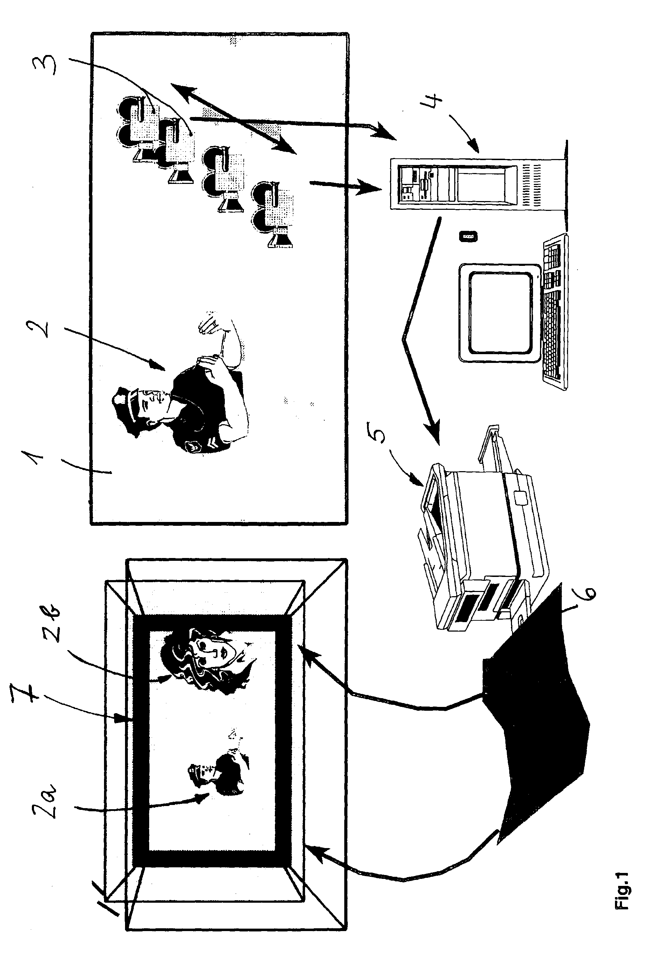

Fig. 1 zeigt schematisch eine Anlage zur erfindungsgemäßen Herstellung von 3D-Fotos. In einem Aufnahmeraum 1 wird vor einem möglichst einfarbigen Hintergrund ein Objekt 2, hier eine Person aufgestellt und mit einer Mehrzahl von elektronischen Kameras 3, vorzugsweise Farbkameras, abgetastet. Diese werden z. B. in Richtung eines Doppelpfeils verschoben, um von dem Objekt 2 eine Vielzahl von nachfolgend als Perspektiven bezeichneten Ansichten aufzunehmen, die alle aus unterschiedlichen Richtungen stammen. Die von den Kameras 3 gelieferten Daten werden in einem Grafikcomputer 4 aufbereitet. Die aufbereiteten Daten werden schließlich einem Schwarz/Weiß-Aufzeichnungsgerät 5 zugeführt und von diesem in binär codierter Form auf einen Bildträger gespeichert, der dann 3D-Foto 6 des Objekts 2 enthält. Das Aufzeichnungsgerät 5 ist z. B. ein Belichtungsgerät oder ein Präzisionsdrucker, um das 3D-Foto 6 durch Belichtung eines Films oder durch Bedrucken einer Folie herzustellen, wobei der Film oder die Folie vorzugsweise mit schwarzen und weißen bzw. transparenten und undurchsichtigen, die Bildinformationen darstellenden Pixeln versehen wird.

Das aufgezeichnete 3D-Foto 6 kann sogleich oder später mit einem Betrachtungsgerät betrachtet werden, wobei es in Form eines dreidimensionalen Bildes 7 erscheint. Bei Bedarf kann das Objekt 2 bereits auf dem 3D-Foto 6 mit einem ausgewählten, in einem Rechner gespeicherten Hintergrund oder einem weiteren Objekt zusammengemischt werden. Das fertige Bild 7 enthält dann außer einem Bild 2a des Objekts 2 auch Bilder 2b weiterer Objekte.

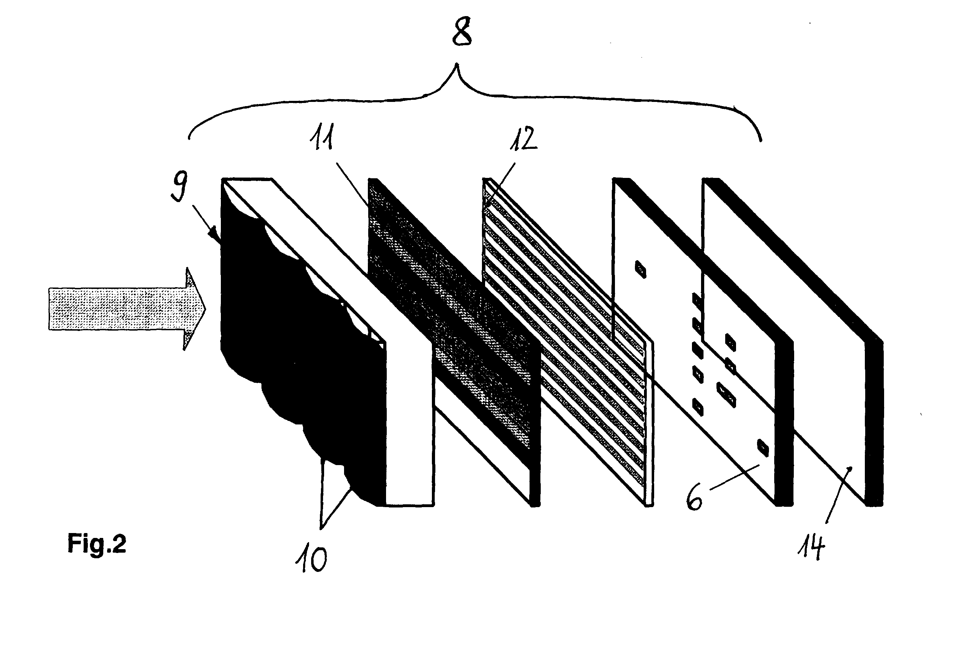

Fig. 2 zeigt Einzelheiten eines zur Betrachtung des 3D-Fotos 6 geeigneten, bevorzugten Betrachtungsgeräts, das insbesondere ein Stero-Hologramm-Display 8 aufweist (PCT WO 98/21619). Das Display 8 enthält verschiedene, auseinandergezogen dargestellte Schichten. Die Vorderseite enthält eine aus Glas bestehende Zylinderlinsen-Rasterscheibe 9 mit beispielsweise 1024 Zylinderlinsen 10 bei einem Pitchabstand von z. B. 0,5 mm und einer vorgewählten, an sich beliebigen Höhe. Die Zylinderlinsen 10 fokussieren in Bezug auf den gedachten Abstand eines Betrachters und im zusammengesetzten Zustand des Displays 8 in der Ebene des 3D-Fotos 6. Zwischen diesem und der Rasterscheibe 9 befinden sich eine Farbmaske 11 und/oder eine Helligkeitsmaske 12, wie weiter unten näher erläutert ist. Außerdem enthält das Betrachtungsgerät eine Beleuchtungsplatte 14, die von hinten auf das 3D-Foto 6 aufgelegt wird und dieses mit gleichmäßigem dispersem Licht beleuchtet. Auch beliebige andere Betrachtungsgeräte, die zur Sichtbarmachung des 3D-Fotos 6 geeignet sind, können angewendet werden.

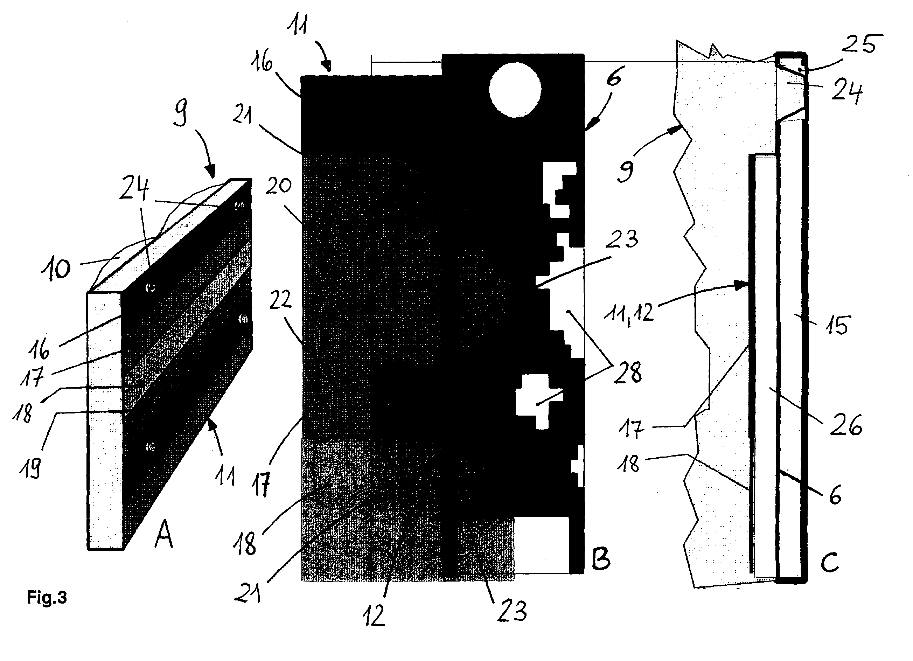

Fig. 3 zeigt in einem linken Teil A perspektivisch und von hinten die Zylinderlinsen-Rasterscheibe 9 mit der auf die Rückseite aufgebrachten Farbe 11, die vorzugsweise aus dünnen, durch Sputtern aufgebrachten Schichten oder eine kombinierten Farb/Helligkeits-Schicht besteht. In einem mittleren Teil B der Fig. 3 sind - mit einem geringen Versatz - von links nach rechts vergrößerte Teilstücke der Farbmaske 11, der Helligkeitsmaske 12 und des 3D-Fotos 6 übereinandergelegt. In einem rechten Teil C der Fig. 3 ist schematisch die Rückseite der Rasterscheibe 9 mit den aufgebrachten Masken 11,12 und eine Glasplatte 15 gezeigt, die z. B. auf ihrer Vorderseite mit dem 3D-Foto 6 belegt ist.

Betrachtungsgeräte dieser Art sind dem Fachmann bereits bekannt und brauchen daher nicht näher erläutert werden. Zur Vermeidung von Wiederholungen wird jedoch die Druckschrift PCT WO 98/21619 durch Referenz auf sie zum Gegenstand der vorliegenden Offenbarung gemacht.

Um auch ein größeres 3D-Foto, z. B. 60 cm x 40 cm, preisgünstig herstellen zu können, ist es wichtig, daß für den Bildträger ein Schwarz-Weiß-Film aus Standardmaterial verwendet werden kann. Dabei taucht das Problem auf, daß es ohne Zusatzmaßnahmen unmöglich ist, einen Film mit einer so großen Fläche μm-genau, d. h. mit einer Genauigkeit von wenigen μm, auf die Farb- und/oder Helligkeitsmaske 11,12 aufzubringen. Beispielsweise müßte Film- oder Folienmaterial auf eine Glasplatte 15 derselben Größe aufgebracht, danach belichtet und entwickelt und schließlich μm-genau auf die vordere Rasterscheibe 9 mit dem Linsenraster 10 und der z. B. aufgesputterten Farb- und/oder Helligkeitsmaske 11,12 aufgebracht werden.

Nachfolgend wird eine erfindungsgemäße Verfahrensweise beschrieben, die die Anwendung von Standard-Filmmaterial ermöglicht, das z. B. auch für Röntgenfotos verwendet wird. Gemäß Fig. 3 wird davon ausgegangen, daß eine Zylinderlinsen-Rasterscheibe 9 vorhanden ist, bei der die Zylinderlinsen 10 vertikal und mit einem Pitchabstand von ca. 0,5 mm angeordnet sind und auf deren Rückseite die Farb- und/oder Helligkeitsmaske 11,12 μm-genau aufgesputtert sind. Die Farbmaske 11 besteht aus horizontalen, in vertikaler Richtung sich wiederholenden Streifen 16, 17, 18 und 19 der Farben schwarz, rot, grün und blau. Jeder einzelne Farbstreifen 16 bis 19 hat eine Höhe von ca. 100 μm. Jeder rote, grüne und blaue Farbstreifen 17 bis 19 ist unterteilt in je drei übereinanderliegende Streifen der Höhe 25 μm, 50 μm bzw. 25 μm. Der mittlere, 50 μm breite Streifen erfährt durch die Helligkeitsmaske 12 keine weitere Helligkeitsfilterung zur Absorbierung des Lichts (z. B. Zone 20 der Helligkeitsmaske 12) während der obere bzw. untere Streifen zusätzlich geschwärzt ist (z. B. Zonen 21, 22 der Helligkeitsmaske 12), so daß Licht absorbiert wird. Dabei absorbiert die Zone 21 z. B. ca. 90 % und die Zone 22 z. B. ca. 98 %. Der aufgelegte Bildträger 6 enthält die eigentliche Bildinformation mit kleinen, quadratischen, schwarzen oder durchsichtigen Flächen bzw. Pixeln in der Größe 5 μm • 5 μm. Das bedeutet, daß auf einem Streifen von 100 μm zwanzig schwarz-weiße Substreifen Platz finden. Das aufzubringende 3D-Foto 6 wird nun so belichtet, daß bei den Übergängen von beispielsweise roten auf grünen Streifen 17, 18 oder von stärker absorbierenden auf weniger absorbierende Zonen 21, 22 jeweils ein 5 μm hoher, aus schwarzen Pixeln hergestellter, schwarz bleibender Streifen 23 (Fig. 3 B) symmetrisch zu den Übergängen aufgebracht wird, während die anderen Pixel zur Codierung frei sind. Im Bereich der Zonen 21, 22 können dann übereinander noch vier 5μm-Pixel zur Codierung benutzt werden, während im Bereich des breiten mittleren Streifens von 50 μm neun übereinanderliegende 5μm-Pixel für die Schwarz-Weiß-Codierung benutzt werden können. Das hat den Vorteil, daß insgesamt bei der hellsten Bildinformation weniger als 50 % des Lichts verloren gehen, d. h. durch die Helligkeitsfilterung absorbiert werden. In dem mittleren Streifen, der keine Helligkeit absorbiert, können z. B. Helligkeitswerte von 0, 25, 50, 75, 100, 125, 150, 175, 200 und 225 codiert werden, indem auf dem 3D-Foto 6 null bis neun Pixel übereinander durch schwarze bzw. durchsichtige Flächen dargestellt werden. In den Zonen 21 können dann folgende fünf Helligkeitswerte, die den ersten additiv überlagert werden, codiert werden: 0, 5, 10, 15 und 20. In der Zone 22 sind schließlich z. B. die Werte 0, 1, 2, 3 und 4 vorhanden, die additiv überlagert werden können. Damit sind insgesamt 250 verschiedene Helligkeitsstufen 0 bis 249 codierbar.

Das auf den Bildträger aufzubringende 3D-Foto 6 kann somit aufgrund der überdeckten Übergänge in vertikaler Richtung jeweils einen Versatz von bis zu ± 2,5 μm aufweisen, ohne daß eine Veränderung der Qualität des Bildes auftritt, weil die Grenzlinien zwischen den Farb- und Helligkeitsstreifen dann stets innerhalb der schwarzen Streifen 23 verbleiben.

Die im 3D-Foto 6 vorgesehenen schwarzen Streifen 16 bieten daher die Möglichkeit einer μm-genauen Positionierung des 3D-Fotos 6 gegenüber der Rasterscheibe 9. Außerdem wird zu diesem Zweck auf der Rückseite der Rasterscheibe 9 eine Glasplatte od. dgl. verwendet, die im Bereich der vorgesehenen schwarzen Streifen 16 kleine Positionierungszapfen 24 mit einem Durchmesser von ungefähr 50 μm aufweist, die senkrecht zur Rückseite, d. h. in Richtung der Dicke des 3D-Fotos 6 betrachtet, eine Länge von z. B. ca. 20 μm haben. In den Bildträger des 3D-Fotos 6 werden vor dem Belichten bzw. Beschreiben μm-genau entsprechende Positionierungslöcher 25 gestanzt. Das Aufzeichnungsgerät 5 (Fig. 1) muß nun ebenfalls in den gleichen Abständen diese Positionierungszapfen aufweisen, damit der Film großflächig μm-genau beschrieben werden kann, oder den Bildträger in anderer Weise μm-genau relativ zu den Positionierungslöchern 25 positionieren. Dadurch ist eine positionsgenaue Lage des Bildträgers bzw. des 3D-Fotos 6 und ggf. der ebenfalls mit den Positionierungslöchern 25 versehenen Glasplatte 15 relativ sowohl zum Herstellungs- als auch zum Betrachtungsgerät mit einer Genauigkeit von ± 2,5 μm sichergestellt.

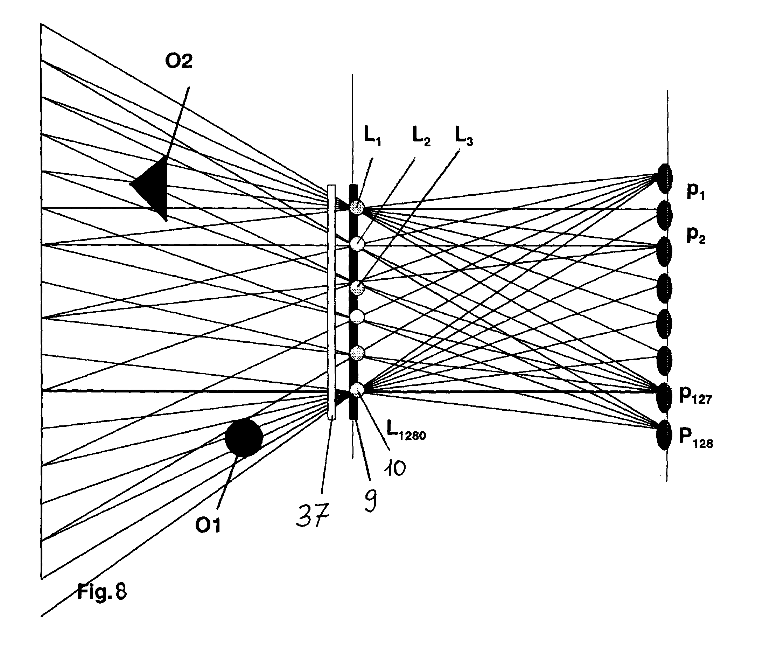

Die Positionierungszapfen 24 bzw. -löcher 25 sind, wie Fig. 8 C zeigt, vorzugsweise konisch, damit sich das Film- bzw. Folienmaterial leichter in die passende Stelle drücken läßt. Es könnte nun vorkommen, daß sich zwischen dem aufgedrückten 3D-Foto 6 und der Rasterscheibe 9 im Bereich der Farbstreifen 17, 18 und 19 Luftblasen bilden und das 3D-Foto 6 an anderen Stellen nicht fest aufliegt. Dadurch könnten später Newton-Ringe entstehen. Deshalb wird die Rückseite der Rasterscheibe 9 zweckmäßig so ausgeführt, daß sie in den Bereichen der Farbstreifen 17, 18 und 19, also in einer Höhe von ca. 300 μm, eine Vertiefung bzw. Aussparung 26 von ca. 3 bis 5 μm aufweist, so daß zwischen der Rasterscheibe 9 und dem 3D-Foto 6 dort, wo die Farbstreifen 16 bis 18 liegen, jeweils Luftkissen entstehen, über die das 3D-Foto 6 gespannt wird. An den Stellen, wo sich die Streifen 16 befinden, kann das 3D-Foto 6 dagegen an der Rückseite der Rasterscheibe 9 anliegen, wie Fig. 3 C zeigt.

Um die Helligkeitswerte in den drei Farbstreifen-Bereichen, die den Zonen 20 bis 22 der Helligkeitsmaske 12 zugeordnet sind, zu codieren, gibt es mehrere Möglichkeiten. Eine ungünstige Codierung wäre, übereinander abwechselnd Pixel in der Reihenfolge transparent, schwarz, transparent, schwarz, etc. anzuordnen. Dies kann bei Verwendung von kohärentem Licht zu störenden Interferenzen fuhren. Deshalb wird erfindungsgemäß vorgeschlagen, in den einzelnen Zonen 20 bis 22 eine Codierung derart zu wählen, daß bei steigender Helligkeit die transparenten Subpixel übereinander so angeordnet werden, daß bei der kleinsten Helligkeitsstufe jeweils in der Mitte einer Zone eine transparente Fläche vorgesehen wird und daß bei steigender Helligkeit um diese Fläche herum, d. h. direkt darüber und darunter usw., weitere transparente Pixel angeordnet werden, so daß keine Wechsel zwischen transparent und schwarz entstehen. Dies führt, wie in Fig. 3 B für Bereiche 28 gezeigt ist, bei fallender Helligkeit in horizontaler Richtung zu einem Keil in der Codiermaske.

Die beschriebenen Positionierungs-Maßnahmen führen dazu, daß ein dreidimensionales Bild mit hoher Qualität entsteht, das für einen Betrachter in der vorgesehenen Abstandsposition eine Vielzahl von verschiedenen Stereobildern mit voller Fotoqualität bieten kann. Voraussetzung hierfür ist, daß dieses Bild von hinten gleichmäßig beleuchtet wird, wobei man natürlich auch auf die Erfahrungen bei TFT-Flachbildschirmen zurückgreifen kann.

Die Herstellung des 3D-Fotos mit den in ihm enthaltenen Perspektiven kann erfindungsgemäß auf unterschiedliche Weise erfolgen. Wird z. B. angenommen, daß jede Zylinderlinse 10 eine Breite von ca. 0,5 mm hat und jedem Pixel eine Breite von 4 μm gegeben wird, könnten 125 Pixel auf der Breite einer Zylinderlinse 10 untergebracht werden. Hier ist angenommen, daß die 3D-Fotos 6 jeweils 128 Perspektiven aufweisen und aus einer Vielzahl "Rasterpixeln" zusammengesetzt sind, die nebeneinander jeweils die Informationen von 128 Perspektiven in Form von 128 "Perspektivpixeln" und übereinander die Farb- und Helligkeitsinformationen in Form von weiteren Subpixeln gemäß der obigen Beschreibung aufweisen. Die Höhe der Rasterpixel kann etwa dasselbe Maß wie ihre Breite besitzen. Wird daher ein derartiges 3D-Foto 6 von der Vorderseite der Zylinderlinsen-Rasterscheibe 9 her betrachtet (vgl. den Pfeil in Fig. 2), dann erfassen die Augen der Betrachter jeweils wenigstens zwei verschiedene Perspektiven derart, daß bei einer horizontalen Bewegung des Kopfes nach rechts oder links weitere Perspektiven vorbeiwandern, d. h. das aufgenommene Objekt 2 (Fig. 1) aus einer Vielzahl von unterschiedlichen Betrachtungsrichtungen aus gesehen wird. Außerdem ist die Anordnung derart, daß die Vielzahl der Perspektiven des Objekts 2 innerhalb eines Sektors mit einem Winkel von z. B. 40° erscheint und sich nach beiden Seiten weitere 40°-Sektoren anschließen, die mehreren Personen die Möglichkeit bieten, dasselbe 3D-Foto 6 gleichzeitig zu betrachten.

Für die computergestützte, tiefengetreue Berechnung eines Bildes werden von einem Gegenstand bis über 100 verschiedene Ansichten aus unterschiedlichen Blickpositionen benötigt. Die simultane Aufzeichnung von derartig vielen Bildern stellt dabei ein technisches Problem und einen erheblichen wirtschaftlichen Aufwand dar. Die dreidimensionale Aufzeichnung einer ruhenden Umgebung kann zwar auch durch eine langsam und gleichmäßig bewegte Kamera vorgenommen werden, die alle paar Millimeter eine Aufnahme macht. Eine solche sequentielle Aufzeichnung ist allerdings zeitaufwendig und versagt jedenfalls dann, wenn es sich um Objekte handelt, die sich bewegen oder während der gesamten Aufzeichnung zumindest teilweise bewegen könnten. Bei der fotografischen Aufnahme von einer Person oder von mehreren Personen muß nämlich immer mit Bewegungen gerechnet werden, so daß auf die gleichzeitige Aufzeichnung unterschiedlicher Perspektiven nicht verzichtet werden kann. Dieses technische Problem wird nun erfindungsgemäß dadurch gelöst, daß eine im Vergleich zur Zahl der aufzunehmenden Perspektiven geringe Anzahl von elektronischen Kameras, beispielsweise zwei, vier oder acht Kameras, nebeneinander in gleichmäßigen Abständen angeordnet, verwendet und synchron ausgelöst werden. Eine Person oder ein sich bewegender Gegenstand wird dabei vorzugsweise vor einem weißen oder gleichfarbigen Hintergrund dargestellt. Aus diesen wenigen Bildern werden dann entweder mittels des Grafikcomputers 4 (Fig. 1) und einer schnellen Korrelationsanalyse alle erforderlichen Zwischenperspektiven berechnet oder es werden die wenigen Kameras abschnittweise gleichzeitig in dieselbe Richtung bewegt und nach jedem Bewegungsabschnitt gleichzeitig ausgelöst, bis alle Perspektiven vorhanden sind. Die nach der Aufbereitung mit Tiefenpositionen gekennzeichneten, dreidimensionalen Bildpixel eines Objektes können dann in eine wunschgemäß ausgewählte, ruhende Bewegung positionsgerecht eingemischt werden.

Bei einfachen Objekten ist es möglich, mit weniger aufgezeichneten Perspektiven auszukommen und aus diesen alle Zwischenperspektiven zu berechnen. Dies führt jedoch bei einer drastischen Reduktion auf nur vier oder acht Kameras und von diesen aufgezeichnete Perspektiven zu erheblichen Problemen, da in der Regel nicht definierte, verdeckte Regionen fehlen. Auch die Rekonstruktion von Tiefenpositionen aus zwei oder mehr Bildern aus unterschiedlichen Richtungen durch Korrelation ist in den meisten Fällen nicht eindeutig möglich, insbesondere wenn sich ähnliche Texturen oder kleine Formen wiederholen.

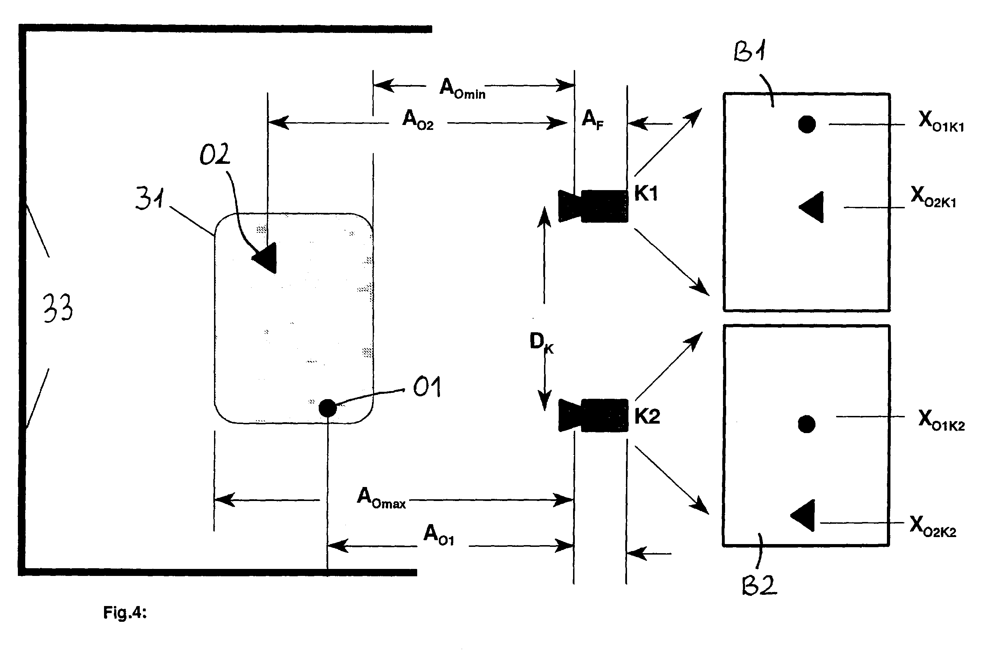

Die Erfindung schlägt für diese Fälle weiter ein Verfahren vor, wie dieses Problem bei 3D-Portraitbildern mit detailreichem Hintergrund gelöst werden kann. Dieses Verfahren, das für das derzeit beste Ausführungsbeispiel der Erfindung gehalten wird, wird nachfolgend und anhand der Figuren 4 bis 8 erläutert. Dabei wird durch die folgenden Einzelmaßnahmen erreicht, daß ein 3D-Portrait in detailreicher Umgebung so gut wie vollständig aus wenigen zweidimensionalen Bildern aus bestimmten, unterschiedlichen Richtungen rekonstruiert werden kann.

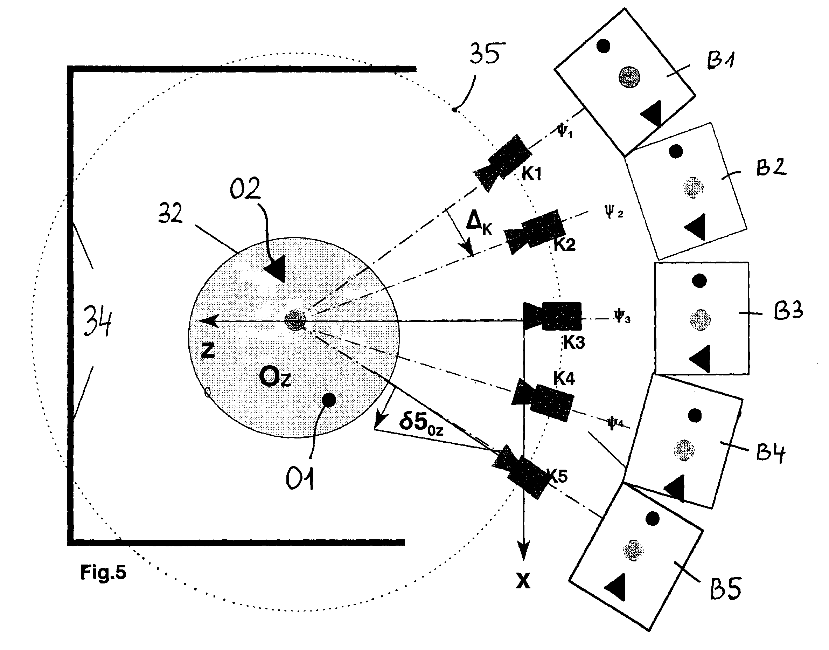

1. Das zu portraitierende Objekt O1, O2 wird in einem genau vordefinierten, begrenzten Raum 31 (Fig. 4) bzw. 32 (Fig. 5) positioniert. Das ist in Fig. 4 und 5 in je einer Draufsicht für die Objekte O1, O2 in Form von Kreisen und Dreiecken angedeutet, die sich bei der Aufnahme in den Räumen 31, 32 mit bekannter Lage, Form und Größe befinden.

2. Zwei, vier oder mehr Kameras K1, K2 (Fig. 4) bzw. K1 bis K5 (Fig. 5) werden um das zu portraitierende Objekt O1, O2 usw. herum genau reproduzierbar aufgestellt, und zwar vor einem bekannten, vorher aufgezeichneten Hintergrund 33 bzw. 34 oder vor einem gleichfarbigen (blauen) Hintergrund mit einem Eichmuster (Fig. 4 und 5). Die Kameras K1 bis K5 befinden sich z. B. sämtlich in der Höhe der Objekte O1, O2.

3. Mehrere, auf einem Bild zu portraitierende Objekte O1, O2 werden zeitlich nacheinander aufgezeichnet. Die mit den einzelnen Kameras K1 bis K5 erhaltenen Bilder sind mit B1 bis B5 bezeichnet. Wichtig ist, daß die Objekte O1, O2 vorzugsweise einzeln und unabhängig voneinander aufgenommen werden. Sie können dann später wunschgemäß gemischt und per Computer in das herzustellende Bild eingefügt werden.

4. Für die einzelnen Pixel der aufgezeichneten, zweidimensionalen Perspektivbilder werden unter Benutzung von a priori-Informationen über Grobform (z. B. Kugel, Stern usw.) und Raumposition (z. B. Lage im Raum 31, 32) eines Objektes die möglichst genauen Tiefenpositionen ermittelt. Die Tiefenpositionswerte werden zu den Farb-Werten als weiteres Wort zu den einzelnen Pixeln in einer Datei abgespeichert.

5. Die jeweils zwischen zwei Kamerapositionen fehlenden Perspektiven werden aus den beiden Randbildern, d. h. den von den zugehörigen beiden Kameras aufgenommenen Bildern, mittels der Tiefenpositionskennzeichnungen der einzelnen Pixel für die Zwischenperspektiven interpoliert und in die entsprechenden Dateiplätze eingetragen bzw. hinzugefügt. Evtl. unterschiedliche Farbwerte des gleichen Objektpunktes aus unterschiedlichen Richtungen werden für die Zwischenwerte linear interpoliert.

6. Ein detailreiches dreidimensionales Umgebungsbild, ggf. ohne die Objekte, wird entweder per Computer erzeugt, wobei jedes Pixel jeder Perspektive mit der Tiefenposition gekennzeichnet ist, oder ein natürliches Umgebungsbild wird mit einer bewegten Kamera aus den entsprechenden Perspektiven nacheinander aufgezeichnet, so daß 128 oder mehr Perspektiven verfügbar sind, aus denen Tiefenangaben für alle Pixel ermittelt werden können. Dabei werden nicht eindeutig gefundene Tiefenpositionen gekennzeichnet und durch eine Sonderprozedur nachträglich festgelegt.

7. Die 3D-Bilder eines Objekts, z.B. O1, O2 und der Umgebung (z.B. 33,34), bestehend aus 128 Perspektivbildern, in denen jedes Pixel mit einer Tiefenangabe gekennzeichnet ist, können nun ansichtengetreu überlagert werden, indem bei jedem Pixel einer Perspektive, das zu unterschiedlichen Abständen von einer Kamera führt, dasjenige mit der geringeren Tiefenposition ausgewählt wird. Bei teiltransparenten Objekten, die entsprechend gekennzeichnet sein müssen, ist das hintere mit einem gewissen Gewicht zu berücksichtigen. Dadurch werden jeweils die Pixel von näher an den Kameras befindlichen Objekten verwertet.

8. Sollen mehrere Objekte bzw. Positionen von 3D-Bildern tiefengetreu an bestimmten Raumpositionen auf einem Bild dargestellt werden, so können die Raumpositionen der einzelnen Objekte mit einer 3D-Mouse verschoben auf einem Monitor angezeigt und fixiert abgespeichert werden.

9. Soll ein Objekt ringsherum aufgezeichnet werden, so wird der in Fig. 5 gezeigte Teilkreis von Kameras zu einem Kreis 35 fortgesetzt. Alle Kameras nehmen dann zwei Bilder auf, eines mit einem Objekt O1 bis O2 in der Mitte und eines ohne Objekt O1 bis O2 in der Mitte. Dadurch kann die nicht zum Objekt gehörende Umgebung nachher aus dem Bild wieder entfernt werden.

10. Die Tiefenpositionen eines Pixels im Raum wird aus zwei benachbarten Perspektiven durch Minimieren einer Umgebungsnorm beim horizontalen Verschieben von Pixel zu Pixel gefunden. Die Norm besteht dabei aus der Summe der Absolutbeträge von Differenzen von Pixeln aus dem einen Bild mit Pixeln aus der Nachbarperspektive, die um einen bestimmten Betrag horizontal verlagert sind. Dort, wo sich die Umgebung des Punktes eines der Bilder am besten mit der Umgebung des Punktes aus dem anderen Bild deckt, ergibt sich die horizontale Verschiebung, die dann mit der Tiefenposition korrespondiert. Dadurch, daß die Grobposition des Objektes O1 bis O2 bekannt ist, kann die Minimierung mit einer erwarteten Verschiebung gestartet werden. Berücksichtigt werden bei der Minimierung auch variabel gewichtete Umgebungspunkte.

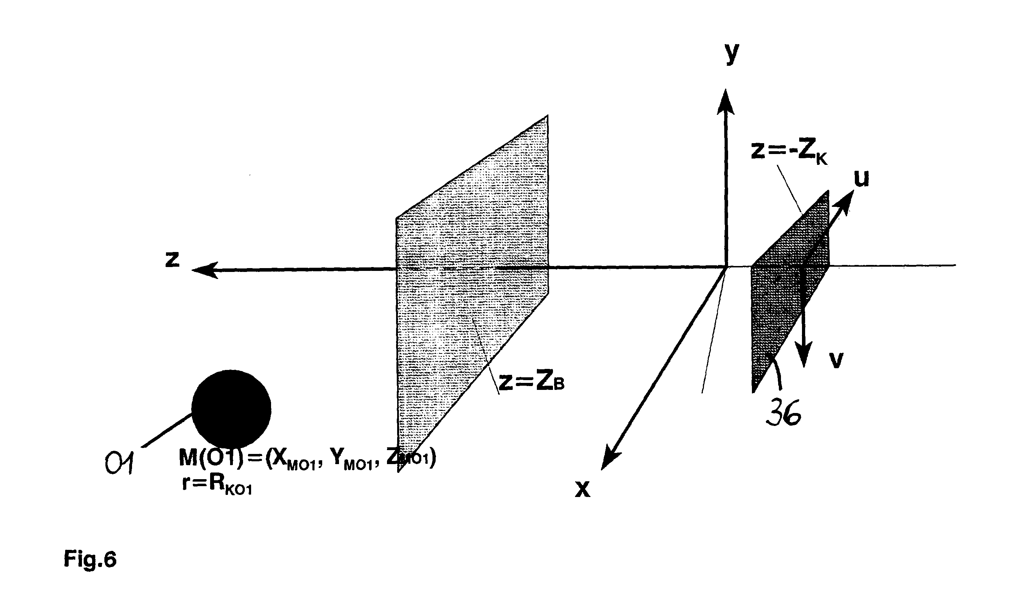

Die Berechnung der Tiefenpositionen aus zwei Bildern kann wie folgt vorgenommen werden (vgl. auch Fig. 6 bis 8):

Es werde angenommen, daß ein bestimmter Objektpunkt auf zwei Bildern benachbarter Kameras eindeutig als Pixel bzw. Objektpunkt identifiziert wurde. Sind dann die Kamerapositionen einschließlich ihrer Richtungen genau bekannt, so kann aus dem horizontalen Versatz dieser Pixel auf den beiden Bildern die Tiefenposition dieses Punktes berechnet werden. Die Tiefenposition wird im Folgenden geometrisch bestimmt. Hierfür werden ein relatives xyz-Koordinatensystem und ein lokales uv-Koordinatensystem verwendet, wie sie in Fig. 6 gezeigt sind. Die relativen Koordinaten sind so angebracht, daß der Ursprung in dem Punkt liegt, in dem sich die Strahlen von den Objektpunkten aus dieser Umgebung kreuzen. Die uv-Koordinaten liegen auf der Kamera-Bildebene und sind in negative xy-Richtungen orientiert. Die uv-Bildebene 36 liegt dabei parallel zur xy-Ebene an der Stelle $z=Z_K$. Ein sichtbarer Objektpunkt mit den Koordinaten $(X_1, Y_1, Z_1)$ erscheint dann auf dem Bild an der Stelle

$$(U_1, V_1) = (X_1, Y_1) \cdot Z_K/Z_1.$$

Nun seien zwei Kameras K1, K2 gegeben mit den lokalen Koordinaten u1, v1 bzw. u2, v2, deren Strahlenkreuzungspunkte auf der x-Achse an den Stellen $X_{K1} = -D_K/2$ und $X_{K2} = +D_K/2$ liegen. Die Bildebenen 36 mögen wieder parallel zur xy-Ebene angeordnet sein, im Abstand $Z_K$. Dann erscheint der identifizierte Bildpunkt auf den Bildern an den Stellen

$$(U1, V1) = (X1 + D_K/2, Y_1) \cdot A_K/Z_1 \text{ bzw.}$$

$$(U2, V2) = (X1 - D_K/2, Y_1) \cdot A_K/Z_1.$$

Dabei ist $Z_K = -A_K$ der Abstand der Bildebene vom Kreuzungspunkt. In der Praxis muß später berücksichtigt werden, daß die Auflösung der Bilder nur endlich ist, z.B. 1280 oder 2560 Pixel horizontal beträgt. Es muß also in Betracht gezogen werden, daß jeder diskrete Wert, wie U1, U2, auf Grund der Quantisierung mit gewissen Toleranzen versehen werden muß.

Da die Parameterwerte für die Ein- und Aufstellungen der Kameras K1,K2 bekannt sind, folgt aus der Differenz der obigen Gleichungen die Angabe für die Tiefenposition:

$$Z_1 = D_K \cdot A_K/(U1-U2).$$

Um eine bessere Ausnutzung des Filmes in der Kamera zu erreichen, ist es vorteilhaft, die Kameras K1, K2 um den Mittelpunkt des vorgesehenen Objektzentrums anzuordnen, wie Fig. 5 zeigt. In diesem Falle würde man Polarkoordinaten bevorzugen, für die folgende Beziehung gilt:

$$x = r \cdot \cos(\varphi) \cdot \sin(\delta), \quad 0<\varphi<2\pi$$

$$y = r \cdot \sin(\varphi) \cdot \sin(\delta), \quad 0<\delta< +\pi$$

$$z = r \cdot \cos(\delta).$$

Die inverse Transformation lautet dann

$$r = \sqrt{(x^2+y^2+z^2)}$$

$$\varphi = \arctan(y/x)$$

$$\delta = \arctan[z/\sqrt{(x^2+y^2)}].$$

Die kreisförmig angeordneten Kameras K1 bis K5 seien auf das Objektzentrum $O_Z$ gerichtet mit den Koordinaten

$$\underline{M}_0 = (x_0, y_0, z_0) = (0,0,R_0).$$

Die Kameras haben also alle einen Abstand $R_0$ vom Objektzentrum $O_Z$ und seien von diesem aus, in negativer z-Richtung betrachtet, an den Winkeln $\Psi_i$ positioniert (Fig. 5), wobei je zwei benachbarte Kameras eine Winkeldifferenz $\Delta_K = \Psi_i - \Psi_{i-1}$ einschließen mögen (vgl. Fig. 5).

Die lokalen Koordinatenn der i-ten Kamera, die auf das Objektzentrum $O_Z$ ausgerichtet ist, seien mit ui, vi bezeichnet. In den relativen Koordinatensystemen der i-ten Kamera $K_i$ kann zu einem identifizierten Objektpunkt mit den Koordinaten $Ui_0$, $Vi_0$ der zugehörige relative Raumwinkel berechnet werden.

In Bezug auf die i.te Kamera ergibt sich folgender Raumwinkel

$$\Psi i_0 = \arctan(Vi_0/Ui_0)$$

$$\delta i_0 = \arctan[\sqrt{ui_0^2 + Vi_0^2}/A_K].$$

Die Projektion des Raumwinkels auf die Ebene y = 0 liefert den Winkel zur z-Achse

$$\delta i_{oz} = \arctan[Ui_0/A_K].$$

Der Schnittpunkt der Projektionen zweier Raumwinkel, von zwei benachbarten Kameras $K_i$, $K_{i-1}$ aus betrachtet, führt dann zur Tiefenposition des identifizierten Objektpunktes.

Der Strahlenkreuzungspunkt der i-ten Kamera in der xz-Ebene ist dann in dem ursprünglichen xyz-Koordinatensystem durch folgende Koordinaten gegeben

$$Xi_K = R_{OK} \cdot \sin(\Psi_i)$$

$$Zi_K = R_{OK} \cdot (1 - \cos(\Psi_i)).$$

Die i-te projizierte Gerade durch den zugehörigen Kamerakreuzungspunkt besitzt dann folgende Gleichung in der xz-Ebene:

$$x-Xi_K = (z-Zi_K) \cdot \tan(\delta i_{OZ} \cdot \Psi i_K).$$

Die Differenz aus zwei solchen benachbarten Gleichungen liefert den Schnittpunkt $z = Z_0$, der gleichzeitig die Tiefenposition $Z_0$ des identifizierten Objektpunktes angibt:

$$Xi_K - Xl_K - Zi_K \cdot \tan(\delta i_{OZ} \cdot \Psi i_K) + Zl_K \cdot \tan(\delta l_{OZ} \cdot \Psi l_K) =$$

$$Z_0 \cdot [\tan(\delta i_{OZ} \cdot \Psi i_K) - \tan(\delta l_{OZ} \cdot \Psi l_K)]$$

$$\text{für } l = i-1.$$

Die Division der Gleichung durch den Faktor bei $Z_0$ auf der rechten Seite dieser Gleichung führt auf die Tiefenposition $Z_0$ des identifizierten Punktes 0. Kann in allen perspektivischen Bildern derselbe Objektpunkt identifiziert werden, so müssen sich aus den benachbarten Perspektiven die gleichen Tiefenpositionen ergeben - bis auf eine zulässige Quantisierungsunsicherheit. Zur Kontrolle sollte die Teifenposition eines identifizierten Objektpunktes nicht nur aus den beiden Perspektiven i und i-1 ermittelt werden, sondern man sollte auch aus mehr Perspektiven wie $l = i + 1$, $l = i-2$, m . die Tiefenpositionen von Punkten ermitteln, um ggf. dann gültige Mittelwerte daraus zu ermitteln. Diejenigen Objektpunkte, die mindestens in zwei verschiedenen perspektivischen Bildern eindeutig identifiziert werden konnten, sind somit mit genauen Tiefenpositionen versehbar. Das gilt auch für eine Anordnung, in der die Kameras um das ganze Objekt herum angeordnet sind.

Hat eine Objektregion in einer gewissen Umgebung gleichmäßige Helligkeit und Farbe, so können Punkte dieser Region auf benachbarten Bildern nicht eindeutig identifiziert werden. In diesen Fällen muß eine ganze Umgebung zur Findung der Tiefenposition herangezogen werden. Dies wird im Folgenden näher erläutert. Die Größe einer zu berücksichtigen Umgebung soll mittels eines Parameters a einstellbar sein. Für die Gewichtung der Umgebung wird eine Exponentialfunktion herangezogen, wie sie auch für eine optische Filterung gilt.

Die Farbwerte auf den Pixeln der Bilder der Kameras sind nicht kontinuierlich abgespeichert, sondern quantisiert und über die lokalen Koordinaten u,v mit Pixelzahlen in der horizontalen Richtung von in der Regel 1280 und in der vertikalen von 1024 digitalisiert. Das bedeutet, die relative horizontale Koordinate ui der i-ten Kamera hat ganzzahlige Werte zwischen -640 und +629, und die vertikale Koordinate vi liegt zwischen -512 und +511. Die horizontalen Koordinatenpunkte mögen gekennzeichnet werden durch die ganzzahligen Indexwerte m und die vertikalen Koordinaten v. Die Indexwerte n,m bezeichnen dann also m Spaltenpositionen und n Zeilenpositionen einer Matrix. Wenn die horizontalen Koordinaten zwischen $-u_{max}$ und $+u_{max}$ variieren und die vertikalen zwischen $-v_{max}$ und $+v_{max}$, dann kann die Quantisierung durch die Integerfunktion

$$m = \text{int}(640 \cdot u/u_{max}) \text{ und}$$

$$n = \text{int}(612 \cdot v/v_{max})$$

ausgedrückt werden.

Die Farben R,G,B sind ebenfalls quantisiert, und zwar in 256 Stufen, d.h. sie haben ganzzahlige Werte zwischen 0 und 255. Ein quantisierter Farbwert in der i-ten Kamera möge bezichnet werden mit Fi. Um die Farben R,G,B an den Pixel n,m mit zu berücksichtigen, werden die Pixelwerte gekennzeichnt durch die Funktion Fi(f,m,n). Dabei stehe f=0 für R (Rot), f=1 für G (Grün) und f=2 für B (Blau).

In der Regel wird es genügen, eine Umgebung von ± 10 Punkten in beiden Richtungen zu berücksichtigen. Dann lautet die Identifizierungsfunktion zwischen zwei Bildern benachbarter Kameras i und l

$$MIN \sum_{\lambda\min}^{\lambda\max} \sum_{\upsilon=-10}^{+10} \sum_{\mu=-10}^{+10} e^{-\frac{\upsilon^2+u^2}{a^2}} \left| Fi(f,m-\mu,n-\upsilon) - Fl(f,m-\mu-\lambda,n-\upsilon) \right|.$$

Derjenige ganzzahlige λ-Wert, bei dem diese Summe ein Minimum ist, liefen die Differenz in der u-Koordinate, die dann auf die Tiefenposition führt. Der Bereich, den λ durchläuft, wird durch die Begrenzung des Portraitierungsraumes bestimmt. Die obige Differenzbildung verschiedener Pixel ist für kleine Werte von n richtig und müßte für größere n-Werte geringfügig korrigiert werden. Punkte vor und hinter dem Objektzentrum in unterschiedlichen Bildern können auf unterschiedliche v-Koordinaten fallen. Der zweite Term in der Differenz ist dann durch einen ganzzahligen Indexwert ρ zu ergänzen. Dieser Wert ρ ist abhängig von n, d.h. der Höhe im Bild, und der Kamera-Differenz i-I: ρ = ρ(n,i-I). Auf eine genaue Berechnung der zugehörigen ganzzahligen Werte kann an dieser Stelle verzichtet werden, da es vorteilhaft ist, diesen Wert in einer Tabelle abzulegen und bei Bedarf aufzurufen. Der Term lautet also FI(f,m-μ-λ, n-v-ρ).

Die wesentlichen Bildinformationen, aus denen die Tiefenpositionen rekonstruiert werden, liegen in den Rändern von Figuren, d.h. bei Farb- und Helligkeitsänderungen im Bild.

Deshalb kann es vorteilhaft sein, die Bilder vor der Ermittlung der Tiefenpositionen zu filtern. Ein solcher Filteroperator, der nicht benötigte Bildinhalte wegfiltert, wäre ein Kantenfilter, der vertikale Kanten anhebt und gleichmäßige Helligkeitsregionen auf einen konstanten Wert setzt. Dadurch kann erreicht werden, daß das oben angegebene, zu ermittelnde Minimum über λ ausgeprägter ist. Auf eine genauere Beschreibung der Kantenfilterung braucht hier nicht eingegangen zu werden, da sie zu den Standartmethoden in der digitalen Bildverarbeitung gehört.

Das Hintergrundbild, das später mit einem Portraitbild tiefengetreu vermischt werden soll, enthält ggf. zahlreiche Details in unterschiedlichen Tiefen, die u.U. aus Nachbarbildern nicht eindeutig rekonstruierbar sind. Man kann aber davon ausgehen, daß in diesem Fall alle Perspektiven von einer Kamera aufgenommen wurden, die sich z.B. horizontal und geradlinig bewegt hat. Es brauchen dann keine Zwischenperspektiven rekonstruiert werden. Dennoch müssen für alle Pixel die Tiefenpositionen ermittelt und hinzugefügt werden, damit eine tiefengetreue Vermischung mit anderen Bildern mögich ist. Da aber eine ganze Sequenz benachbarter Bilder vorhanden ist, ist es möglich, über mehrere Perspektiven hinweg eine Bewegung von Konturen zu detektieren. Aus der über eine gewisse Anzahl benachbarter Bilder ermittelten Geschwindigkeit kann dann unmittelbar auf die Tiefenposition dieser Kontur geschlossen werden. Bleibt dennoch eine Region übrig, in der sich keine Konturen befinden und gleichbleibende Farben auftreten und in der auch keine Bewegung erkennbar ist, so muß man zusätzlich die Annahme treffen, daß eine Fläche, die von einer sich bewegenden Kontur umhüllt wird, sich genauso schnell bewegt wie die Kontur, d.h. sich in der gleichen Tiefenposition befindet.

Auf diese Weise wird es dann möglich, daß jedes RGB-Pixel in jeder Perspektive mit einer Tiefenangabe gekennzeichnet werden kann. Darüberhinaus wird es per Software-Tools möglich sein, auch Tiefenpositionen von Gegenständen zu verändern. Legt man Schnitte durch die so erfaßte dreidimensionale Landschaft, so läßt sich auf diese Weise testen, ob die Ergebnisse mit den gewünschten oder tatsächlichen Ergebnissen übereinstimmen.

Eine Interpolation von Zwischenperspektiven kann schließlich auf folgende Weise vorgenommen werden:

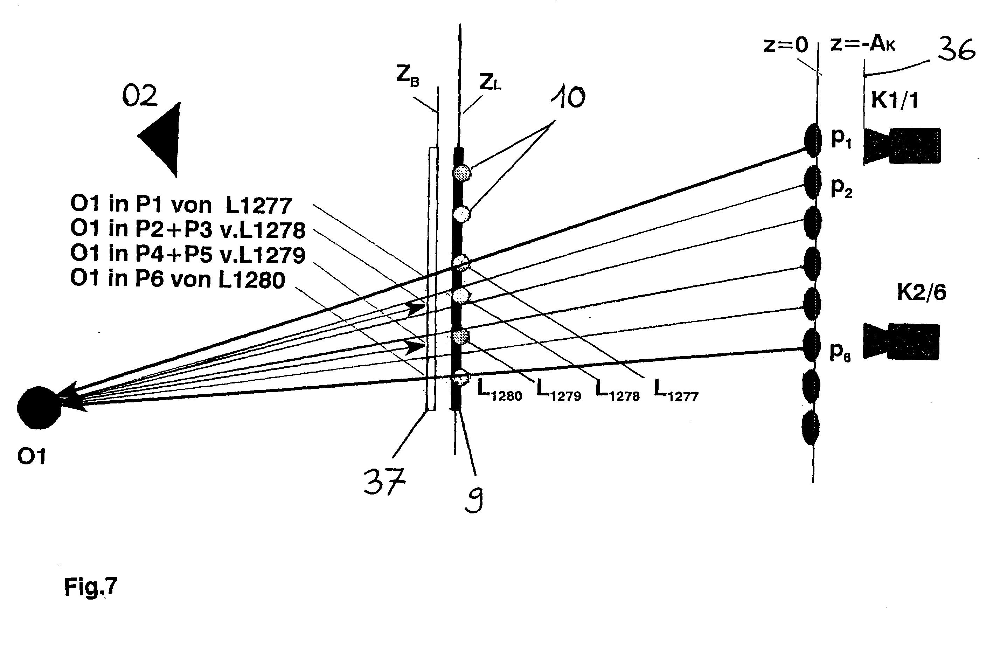

Objektpunkte oder Objektregionen, die in der Tiefenposition von zwei Kamerapositionen aus eindeutig identifiziert werden konnten, können auf Zwischenperspektiven durch die im Folgenden beschriebene Interpolation dargestellt werden. Wie in Fig. 7 gezeigt ist, sei ein Punkt des Objektes eindeutig identifiziert auf den beiden Kameras K1 und K2, deren lokale Koordinaten u1 und v1 bzw. u2 und v2 eine Ebene aufspannen, die parallel zu der Bildebene ist. Darüberhinaus werde ohne Beschränkung der Allgemeinheit angenommen, daß das Raster in den Koordinaten u1 bzw. u2 übereinstimmt mit dem Raster bzw. dem Pitchabstand der hier als Schlitzraster dargestellten Zylinderlinsen-Rasterscheibe 9. Es sind also alle 1280 Pixel auf den lokalen Koordinaten u1 und u2 wiederzufinden. Ist die von u1 und u2 aufgespannte Ebene nicht parallel zu der Ebene der Rasterscheibe 9, so muß ein linearer Streckungsfaktor berücksichtigt werden. Es werde nun angenommen, daß in der Kamera K1 ein Bild der Perspektive P1 mit der richtigen Rasterung aufgezeichnet ist. Das Gleiche werde angenommen für die Perspektive P6 des Objektes, die in der Kamera K2 in der richtigen Rasterung aufgezeichnet sei. Dann können die RGB-Werte inklusive der ermittelten Tiefenpositionen in die Perspektiven P1 bzw. P6 eingetragen werden, die in der Regel 1280 Pixel horizontal enthalten und 128 Perspektiven je Rasterpixel. Die Objekte im Raum sind also jetzt abzubilden auf die Bildebene 37, die sich im Brennpunkt der schematisch angedeuteten Zylinderlinsen 10 und in der Ebene $z = Z_B$ befindet. Ist ein identifizierter Punkt z.B. des Objekt O1 in den Perspektiven P1 und P6 der Kameras K1 und K2 mit der zugehörigen Tiefenposition und den Farbwerten bekannt, so kann die in Ebene $z = 0$ gezeigte Rasterung für die Perspektiven P2, P3, P4 und P5 durchlaufen werden. Dabei gibt die Ebene $z = 0$ die Kamera- bzw. Sichtposition (Perspektiven) an. Es können Strahlen zu einem Objektpunkt u1 gezogen und die Durchstoßpunkte durch die Bildebene $z_B$ genau berechnet werden. Das auf der Bildebene $z_B$ angelegte Pitchraster kennzeichnet die Zugehörigkeit zu bestimmten Pixeln.

Es kann nun vorkommen, daß die Strahlen von benachbarten Perspektiven zu dem Objektpunkt in die gleiche Pixelspalte fallen. Dann sind diese auch in die zugehörigen Perspektiven der gleichen Pixelspalte einzutragen. Stehen dort an dieser Position bereis Werte mit der gleichen Tiefenposition, so wird hieraus ein Mittelwert gebildet. Ist an einer Stelle bereits ein Objektpunkt mit einer größeren Tiefenposition eingetragen, so wird dieser überschrieben. Ist ein Objektpunkt mit einer kleineren Tiefenposition eingetragen, so wird keine Eintragung vorgenommen. Hat der gleiche identifizierte Punkt des Objekts O1 in der Kamera K1 einen etwas anderen Farbwert als in der Kamera K2, so werden diese Farbwerte von der Perspektive P1 bis P6 linear interpoliert. Wenn die Rasterung für die Perspektiven fein genug ist und die Bildobjekte sich in der richtigen Position befinden, so wird beim Durchlaufen der verschiedenen Perspektiven kein Pixel in den Zwischenpositionen ausgelassen. Befindet sich jedoch ein Objektpunkt vor der Scheibe, so kann es vorkommen, daß die Strahlen durch bestimmte Pixel gehen und dazwischen einige ausgelassen werden. In diesem Falle ist es erforderlich, daß die ausgelassenen Pixelpunkte Eintragungen bekommen mit den gleichen Werten, den gleichen Tiefenpositionen und den gleichen Perspektiven, wie sie in den direkt benachbarten Pixelspalten eingetragen sind. Sind nun alle identifizierten Objektpunkte durchlaufen, so sind in sämtlichen Rasterpixeln der Bildebene (1280 x 1024) 128 verschiedene RGB-Werte mit Tiefenpositionen eingetragen.

So wie die horizontalen und vertikalen Koordinaten des Bildes quantisiert sind, ist es auch sinnvoll, die Tiefenpositionen zu quantisieren. Wählt man beispielsweise für die Kennzeichnung der Tiefenangaben eine 12-bit-genaue Quantisierung, so sind Tiefenpositionen zwischen 0 und 4095 zu unterscheiden. Dabei ist 0 die Position der Kamera bzw. des später betrachtenden Auges und die größte Position ist die gewählte maximale Tiefenposition, beispielsweise 10 m. Bei der Eintragung der Objektpunkte in die Bildebene, d. h. in die verschiedenen Perspektiven aller Rasterpixel, wird von einer Anfangseintragung ausgegangen, bei der in jeder Perspektive jeden Rasterpixels die größtmögliche Tiefenposition eingetragen ist, die von jedem anderen vorkommenden Objekt einer geringeren Tiefenposition überschrieben werden kann. Auf diese Art und Weise erhält man für ein Portraitbild alle gewünschten Eintragungen in die Perspektiven. Ist eine Rundherum-Portraitierung vorgesehen, so muß man zwischen verschiedenen Darstellungsebenen unterscheiden und nicht parallele Bildebenen und Kameraebenen umrechnen.

Auf Erweiterungen dieses Verfahrens, beispielsweise für teiltransparente Objekte, soll an dieser Stelle nicht eingegangen werden. Es würde dann erforderlich, daß bei einem Rasterpixel bei der gleichen Perspektive mehrere Eintragungen und Farbwertpositionen vorgesehen werden müßten.

Ein besonderer Vorteil des erfindungsgemäßen Verfahrens besteht darin, daß durch eine echte dreidimensionale Darstellung eine natürliche Darstellung eines räumlichen Gegenstands erzielt wird. Die 3D-Bilder können auf handelsüblichen, preisgünstigen Schwarzweißfilmen mit Größen über DIN A3 untergebracht werden. Die in dem Graphikcomputer abgelegten dreidimensionalen Hintergrundbilder sowie Objekte tragen alle Objektkennungen und können unterschiedlich in einem ziusammengesetzten Bild positioniert werden. Es kann auch ein Gruppenbild vieler Personen vor einem bekannten Objekt tiefengetreu zusammengestellt werden. Bevor ein Film belichtet wird, kann ein solches Szenario auf einem personenadaptiven 3D-Monitor [z.B. R.Börner in "Autostereoscopic 3-D Imaging by Front and Rear Projection and on Flat Panel Displays", Displays Vol. 14, No. 1 (1993), pp 39 - 46] betrachtet und mit Veränderungen in der Darstellung versehen werden.

Für Werbezwecke können auch Objekte mit bestimmten Bewegungseffekten aufgezeichnet werden. Beispielsweise kann sich beim Vorübergehen ein Gesicht verändern oder ein Arm heben, oder es kann sich aus einer bestimmten Blickrichtung ein Fenster öffnen etc. Dabei ist es durchaus denkbar, daß sich ein sehr großes Bild aus mehreren kleinen Teilbildern zusammensetzen läßt.

Auch Personen, denen eine normale Stereosicht verwehrt ist, weil beispielsweise ein Auge zu schwach sieht, können den 3D-Effekt hierbei wahrnehmen, indem sie ihre Position geringfügig hoizontal variieren und hier die verschiedenen Perspektiven erkennen.

Bei einer weiteren bevorzugten Variante des erfindungsgemäßen Verfahrens werden genau zwei Kameras für die Aufnahmen der 3D-Fotos verwendet. Die Kameras weisen einen bestimmten, horizontalen Abstand voneinander auf, der so gewählt ist, daß die jeweils zwei aufgezeichneten Perspektiven bzw. Ansichten denjenigen entsprechen, die ein Betrachter mit dem rechten und linken Auge sieht, wenn er sich später im Standardabstand vor dem fertigen Rasterbild befindet. Ein derartiges System mit zwei Kameras, die einen vorgewählten, festen Abstand von einenander haben, bringt den Vorteil mit sich, daß auch leicht bewegte Szenen aufgezeichnet werden können, bei denen jeweils immer diejenigen beiden Perspektiven gleichzeitig aufgenommen werden, die die Augen später auch sehen. Die dicht nebeneinander liegenden Perspektiven können dann unterschiedlichen Zeitschlitzen angehören, aber dennoch sehen die Augen des Betrachters zeitsynchrone Aufnahmen. Bei geringfügigen seitlichen Bewegungen des Betrachters können auch leichte Bewegungen eines Gegenstandes wahrgenommen werden. Beispielsweise kann ein Porträt, wird das Bild von links betrachtet, einen ernsten und beim Betrachten von rechts enen freundlichen Gesichtsausdruck aufweisen. Auch zufällige Bewegungen wie beispielsweise Augenzwinkern wirken dann nicht störend. Hingegen würde es stören, wenn das linke Auge des Betrachters in einer bestimmten Postition ein geschlossenes Auge des Porträts sehen würde und das rechte ein offenes. Natürlich ist hier der richtige gültige Abstand des Betrachters von der Oberfläche des Rasterbildes einzuhalten. Möglich wäre es hierbei auch, zwischen zwei von den Kameras gleichzeitig hergestellten Aufnahmen einerseits die Kameras gemeinam um eine vorgewählte Strecke längs einer vorgewählten Bahn zu bewegen und andererseits gleichzeitig das Objekt in eine vorgewählte Richtung zu verschieben oder zu drehen. Auf diese Weise ist es möglich, bei der späteren Betrachtung des 3D-Fotos durch geringfügige Bewegungen des Kopfes ganz unterschiedliche Ansichten des Objekts (z.B. von vorn, von der Seite und von hinten) zu sehen.

Das im Rahmen der Erfindung wichtigste Anwendungsgebiet liegt bei den Fotostudios, die mit einem System aus elektronischen Kameras, einem Graphikcomputer, einem personenadaptiven 3D-Monitor und einem Schwarz-Weiß-Belichtungsgerät oder Präzisionsdrucker ausgerüstet sind. Selbstverständlich kann diese technische Ausrüstung aber auch dazu genutzt werden, um preisgünstige, große, zweidimensionale Farbbilder anzufertigen. Anstelle einer Zylinderlinsen-Rasterscheibe können dabei auch preisgünstigere Bildgläser mit Farb- und Helligkeitsmasken verwendet werden.

Ein weiteres interessantes Anwendungsgebiet ist die Radiologie in der Medizintechnik. Anstatt eines Modells kann ein 3D-Großbild präsentiert werden. Schwer zu interpretierende, zweidimensionale Röntgenbilder können durch dreidimensionale ersetzt werden. Jeder Arzt, der heute Röntgenbilder interpretiert, braucht nur zusätzlich eine Rasterscheibe mit Farb- und Helligkeitsmaske, wenn er auf eine 3D-Röntgenstation zurückgreift. Das gleiche gilt für die Kernspintomographie.

Werden mehrere Teilbilder zu einem Großbild zusammengesetzt, so wird in der Architektur ein besonders interessantes Anwendungsgebiet erschlossen.

Die Erfindung ermöglicht nach der obigen Beschreibung eine dreidimensionale, autostereoskope Darstellung von Gegenständen, die wie ein beschriebenes Hologamm-Display funktioniert. Insbesondere wird die Anwendung einer preisgünstigen schwarz-weißen Filmfolie für eine Großdarstellung (z.B. 64 cm x 48 cm) verwendbar, indem ein μm-genaues Justierverfahren vorgeschlagen wird. Um die dreidimensionale Aufbereitung zu vereinfachen und auf wenige Objekte zu konzentrieren, hält ein Graphikcomputer vorbereitete, dreidimensionale Umgebungen bzw. Hintergründe zur Auswahl bereit. Eine zu portraitierende Person wird von einem elektronischen Kamerasystem fotografiert. Die Daten werden zu enem Graphikcomputer geleitet, der diese Informationen auf das spezifische 3D-Schwarzweißformat umrechnet und einer Belichtungsmaschine oder einem Drucker unmittelbar zuführt. Nach wenigen Minuten kann das Bild betrachtet und gegebenenfalls verändert aufgenommen und dargestellt werden. Das Verfahren arbeitet vorzugsweise mit einer Hintergrundbeleuchtung, aber auch eine normale diffuse Bestrahlung von vorne ist möglich.

Die Erfindung ist nicht auf die beschriebenen Ausführungsbeispiele beschränkt, die auf vielfache Weise abgewandelt werden können. Insbesondere gilt dies für die beispielhaft angegebenen Bildgrößen, die Dimensionen der verwendeten Zylinderlinsen-Rasterscheibe, die Zahl der insgesamt auf dem Rasterbild vorhandenen Perspektiven sowie die pro Bild vorgesehene Azahl von Rasterpixeln bzw. von Subpixeln pro Rasterpixel. Schließlich versteht sich, daß die einzelnen Merkmale der Erfindung auch in anderen als den dargestellten und beschriebenen Kombinationen angewendet werden können.

**Patentansprüche**

1. Verfahren zur Herstellung eines 3D-Fotos (6) von einem Objekt (2, O1, O2), wobei das Objekt (2,O1, O2) mittels elektronischer Kameras (3, K1 - K5) aus unterschiedlichen Richtungen aufgenommen wird, die erhaltenen Daten einem Grafikcomputer (4) zugeführt werden, der Grafikcomputer (4) die erhaltenen Daten verarbeitet und an ein Aufzeichnungsgerät (5) weiterleitet und das Aufzeichnungsgerät (5) einen schwarz-weißen Bildträger herstellt, auf dem das 3D-Foto (6) mit einer Vielzahl von je einer Richtung zugeordneten Perspektiven digital aufgezeichnet ist, dadurch gekennzeichnet, daß die Daten vom Grafikcomputer (4) so verarbeitet werden, daß das 3D-Foto (6) aus einer Vielzahl von Rasterpixeln zusammengesetzt wird, wobei jedes Rasterpixel nebeneinander Informationen von allen Perspektiven enthält, daß zur Herstellung des 3D-Fotos (6) wesentlich weniger Kameras (3, K1 bis K5) verwendet werden, als der Vielzahl der Perspektiven entspricht, und daß die Vielzahl der Perspektiven durch Verschiebung der Kameras (3, K1 bis K5) relativ zum Objekt (2,O1, O2) und/oder dadurch erhalten wird, daß von stationären Kameras (3, K1 bis K5) nicht lieferbare Perspektiven durch Interpolation der von den Kameras (3, K1 bis K5) gelieferten Perspektiven mit dem Grafikcomputer (4) generiert werden.

2. Verfahren nach Anspruch 1, dadurch gekennzeichnet, daß die Interpolation unter Anwendung eines Minimierungs-Algorithmus durchgeführt wird.

3. Verfahren nach Anspruch 1 oder 2, dadurch gekennzeichnet, daß das Objekt (2, O1, O2) bei der Aufnahme in einem genau definierten, bekannten Raum (31, 32) positioniert wird.

4. Verfahren nach einem der Ansprüche 1 bis 3, dadurch gekennzeichnet, daß die Kameras (3, K1 bis K5) abschnittsweise bewegt werden und daß nach jedem Bewegungsabschnitt mit allen Kameras (3, K1 bis K5) gleichzeitig je eine Aufnahme des Objekts (2, O1, O2) gemacht wird.

5. Verfahren nach einem der Ansprüche 1 bis 4, dadurch gekennzeichnet, daß genau zwei Kameras (K1, K2) verwendet werden, die einen bestimmten horizontalen Abstand ($D_K$) derart aufweisen, daß die jeweils zwei aufgezeichneten Perspektiven denjenigen entsprechen, die ein Betrachter im Standardabstand vor dem späteren 3D-Foto mit dem rechten und linken Auge sieht.

6. Verfahren nach einem der Ansprüche 1 bis 5, dadurch gekennzeichnet, daß die verschiedenen Kameras (K1 bis K5), die ein Objekt (O1, O2) gleichzeitig aufzeichnen, um das zu fotografierende Objekt (O1, O2) herum kreisförmig verteilt werden.

7. Verfahren nach Anspruch 6, dadurch gekennzeichnet, daß die Kameras (3, K1 bis K5) zur Aufzeichnung von Zwischenperspektiven um das aufzuzeichnende Objekt (2, O1, O2) rotieren.

8. Verfahren nach Anspruch 6, dadurch gekennzeichnet, daß die Kameras (K1 bis K5) auf einer Kreisbahn um das Objekt (O1, O2) herum angeordnet sind und die Zwischenperspektiven durch Interpolation im Grafikcomputer (4) unter Anwendung eines Minimierungs-Algorithmus für kreisförmig angeordnete Kameras (K1 bis K5) generiert werden.

9. Verfahren nach einem der Ansprüche 1 bis 8, dadurch gekennzeichnet, daß die Rasterpixel für jede Perspektive mit einer Tiefenposition gekennzeichnet werden, die aus Veränderungen von Konturen des Objekts (2, O1, O2) bei benachbarten Perspektiven berechnet werden.

10. Verfahren nach Anspruch 9, dadurch gekennzeichnet, daß zwei verschiedene, dreidimensionale Bilder, die im Grafikcomputer (4) gespeichert sind, miteinander in einem Bild tiefengetreu vermischt werden, indem bei jeder Perspektive in jedem Pixel dasjenige Perspektivenpixel in das zu erzeugende Bild eingetragen wird, das die geringere Tiefenposition hat.

11. Verfahren nach Anspruch 10, dadurch gekennzeichnet, daß die Perspektivenpixel zusätzliche Transparenzmerkmale aufweisen, so daß in einem dritten Bild, das aus zwei gespeicherten Bildern zusammengesetzt wird, auch die dahinterliegenden Pixelperspektiven mit einem Farbanteil in das neue Pixel eingetragen werden.

12. Verfahren nach einem der Ansprüche 1 bis 11, dadurch gekennzeichnet, daß das aufgezeichnete 3D-Foto (6) zur Betrachtung auf einem adaptiven 3D-Monitor eingerichtet ist.

13. Verfahren nach Anspruch 12, dadurch gekennzeichnet, daß das aufgezeichnete 3D-Foto so eingerichtet ist, das auf dem Monitor separat aufgezeichnete, dreidimensionale Objekte oder Hintergründe in das 3D-Foto (6) hineinkopiert und mit einem 3D-Cursor wunschgemäß positioniert werden können.

14. Verfahren nach einem der Ansprüche 1 bis 13, dadurch gekennzeichnet, daß die Rasterpixel übereinander angeordnete Informationen betreffend Farbe und/oder Helligkeit in digitaler Form enthalten, wobei diese Informationen in Abhängigkeit von einer beim Betrachten des 3D-Fotos (6) verwendeten Farb- und/oder Helligkeitsmaske (11,12) gewählt sind.

15. Verfahren nach einem der Ansprüche 1 bis 14, dadurch gekennzeichnet, daß jedes Rasterpixel des 3D-Fotos in einem einer einzelnen Farbe der Farb- und/oder Helligkeitsmaske (11,12) zugeordneten Bereich einen mittleren Abschnitt mit neun übereinanderliegenden, schwarz-weiß codierbaren Pixeln und je einen darüber und darunterliegenden Abschnitt mit je vier übereinanderliegenden, schwarz-weiß codierbaren Pixeln aufweist.

16. Verfahren nach Anspruch 15, dadurch gekennzeichnet, daß das 3D-Foto (6) im Bereich von Übergängen zwischen den Abschnitten jeweils nicht codierbare, schwarze, zum Ausgleich von Montagetoleranzen bestimmte Pixel (23) aufweist.

17. Verfahren nach Anspruch 15 oder 16, dadurch gekennzeichnet, daß die Pixel in den Abschnitten jeweils so codiert werden, daß die weiß codierbaren Pixel jeweils in der Mitte eines Abschnitts und dort direkt übereinander zu liegen kommen.

18. Verfahren nach einem der Ansprüche 1 bis 17, dadurch gekennzeichnet, daß der Bildträger mit zur µm-genauen Positionierung bestimmten, mit entsprechenden Justierzapfen (24) im Aufzeichnungs- und/oder Betrachtungsgerät (5) zusammenwirkenden Justierlöchern (25) versehen wird.

Fig.1

Fig.2

EP 0 994 630 A2

Fig.3

15

Fig.4:

EP 0 994 630 A2

Fig.5

Fig.6

O2

$Z_B$  $Z_L$  10

O1 in P1 von L1277
O1 in P2+P3 v.L1278
O1 in P4+P5 v.L1279
O1 in P6 von L1280

z=0  z=-$A_K$  36

K1/1

$p_1$
$p_2$

K2/6

$p_6$

$L_{1280}$  $L_{1279}$  $L_{1278}$  $L_{1277}$

O1

37

9

Fig.7

EP 0 994 630 A2

Fig.8